Europäisches Patentamt

European Patent Office

Office européen des brevets

(11) Veröffentlichungsnummer: **0 346 616**
**A2**

# EUROPÄISCHE PATENTANMELDUNG

(21) Anmeldenummer: 89108676.1

(22) Anmeldetag: 13.05.89

(51) Int. Cl.⁴: **C02F 11/00 , B01J 2/12 , B01J 2/14**

(30) Priorität: 11.06.88 DE 3819910

(43) Veröffentlichungstag der Anmeldung:
20.12.89 Patentblatt 89/51

(84) Benannte Vertragsstaaten:
AT BE CH DE ES FR GB IT LI NL SE

(71) Anmelder: Klöckner-Humboldt-Deutz
Aktiengesellschaft
Deutz-Mülheimer-Strasse 111 Postfach 80 05 09
D-5000 Köln 80(DE)

(72) Erfinder: Gildemeister, Hans-H., Dr.
Im Meisenbusch 19
D-5063 Overath 6(DE)

(54) **Einrichtung zur Herstellung von pelletförmigen mit pulvrigem Drainagematerial bepuderten Formkörpern aus mechanisch entwässertem Schlamm.**

(57) Um zum Zwecke der Herstellung von pelletförmigen mit pulvrigem Drainagematerial bepuderten Schlammformkörpern eine Einrichtung zu schaffen, die vergleichsweise einfach und klein gebaut ist und trotzdem eine hohe Durchsatzleistung ermöglicht, und die Formkörper erzeugt, die sich in einer nachgeschalteten Presse sehr wirkungsvoll auspressen und damit nachentwässern lassen, wird erfindungsgemäß ein rotierender Teller (11) oder eine rotierende Trommel (27) mit in Umfangsrichtung verlaufenden Schlitzen (10, 30) zum Durchtritt der fertig geformten Formkörper (26) vorgeschlagen, wobei die Schlitze (10, 30) gleichermaßen für den schnellen Austritt bereits ausreichend kleiner pelletförmiger Formkörper sorgen und zugleich wirksam den Austritt zu großer Formkörper verhindern.

FIG.1

## Einrichtung zur Herstellung von pelletförmigen mit pulvrigem Drainagematerial bepuderten Formkörpern aus mechanisch entwässertem Schlamm

Die Erfindung betrifft eine Einrichtung zur Herstellung von pelletförmigen mit pulvrigem Drainagematerial bepuderten Formkörpern aus mechanisch entwässertem Schlamm, insbesondere Klärschlamm, mit einem Rotor, auf dessen Boden der Schlamm mittels oberhalb des Rotorbodens rotierenden Messern in Portionen zerteilt und dadurch zu den Formkörpern geformt werden.

Die Entsorgung von Schlämmen, insbesondere Klärschlämmen, erfordert zunehmend höhere Entwässerungsgrade um Deponien zu entlasten, Deponiebedingungen zu erfüllen, thermische Verfahren von Wasser zu entlasten oder eine energieautarke Verbrennung sicherzustellen. Die Austräge von Zentrifugen, Siebbandpressen oder anderen marktüblichen Entwässerungsverfahren erfüllen diese Bedingungen nicht oder nur unvollständig. Um wesentlich höhere Entwässerungsgrade zu erreichen, ist es bekannt (EP-PS 0 092 146), den in Zentrifugen, Siebbandpressen oder dergleichen vorentwässerten Schlamm in pelletförmige Klümpfchen oder Formkörper zu zerteilen, die Schlammformkörper mit einer Schicht aus pulvrigem Drainagematerial wie z. B. Asche zu umhüllen und danach eine Schüttung dieser Formkörper in einer Presse zusammenzupressen und dabei nachzuentwässern.

Zur Herstellung der mit pulvrigem Drainagematerial bepuderten pelletförmigen Formkörper muß einerseits der oft in größeren Klumpen oder Fladen anfallende Schlammaustrag der Vorentwässerungsstufe, z. B. Zentrifuge, zu kleineren Portionen, d. h. zu Klümpchen von vorzugsweise 1 bis 15 mm Größe zerteilt werden, im folgenden Formkörper genannt. Zum anderen müssen diese Formkörper mit einer Schicht des pulverförmigen Drainagematerials umhüllt werden. Nach dem Vorentwässerungsschritt, bei dem im Falle einer Zentrifuge beispielsweise polymere Flockungshilfsmittel als Konditionierungsmittel eingesetzt werden, hat das nachzuentwässernde Material eine innere Struktur, die auch in den zu formenden pelletförmigen Formkörpern weitestgehend erhalten bleiben muß. Daher muß die Formkörperbildung äußerst schonend, d. h. insbesondere unter Vermeidung von Scherbeanspruchung, erfolgen.

Die Herstellung der mit dem pulvrigen Drainagematerial beschichteten Formkörper geschieht beim bekannten Stand der Technik (EP-PS 0 092 146) innerhalb einer sogenannten Pelletiertrommel, die in Achsrichtung geneigt ist, langsam rotiert und in deren Innerem rotierende Messer angeordnet sind. Am oberen Trommelende werden sowohl das in Formkörper zu formende vorentwässerte Material wie auch eine Teilmenge des Drainagestaubes zugegeben und infolge der Trommeldrehung dem Wirkungsbereich der Messer zugeführt, die für eine Zerteilung des Schlammaterials sorgen. Der zugegebene Staub verhindert ein Wiederzusammenkleben der frisch gebildeten Oberflächen. Der Materialtransport in der Trommel erfolgt im wesentlichen infolge der Trommelneigung, der die an der aufsteigenden Trommelwand abrollenden Schlammformkörper folgen. Beim Abrollvorgang wird zugleich das Drainagematerial angelagert, dessen Restmenge etwa in dem Trommelbereich zugegeben wird, wo die Hauptmenge der Formkörper bereits gebildet ist.

Bei der bekannten Vorgehensweise der Herstellung der Schlammformkörper können im wesentlichen die folgenden nachteiligen Umstände auftreten:
- Am Zulauf zur Trommel gebildete hinreichend kleine Formkörper müssen die Trommel in ihrer ganzen Länge passieren.
- Sie werden dadurch unnötig weiter mechanisch beansprucht, was insbesondere bei hohem Füllungsgrad zu einer Beeinträchtigung der Nachentwässerbarkeit führen kann. Durch Scherbeanspruchung werden die Formkörperoberflächen pastöser und fördern dadurch ein Wiederverkleben der gebildeten Formkörper, besonders wenn das Schlammaterial thixotrop ist. Das wirkt dem erforderlichen Zerteilvorgang entgegen.
- Der zur Verfügung stehende materialerfüllte Raum, der durch eine relativ geringe zulässige Schütthöhe der Formkörper ohnehin sehr eingeschränkt ist, wird unnötig von bereits fertigen Formkörpern beansprucht. Dadurch ist die Durchsatzleistung der bekannten Pelletiertrommel stark eingeschränkt.
- Es kann nicht wirksam verhindert werden, daß zu große gebildete pelletförmige Formkörper (etwa größer 15 mm) die Trommel passieren und den Nachentwässerungsschritt negativ beeinflussen.

Der Erfindung liegt die Aufgabe zugrunde, zum Zwecke der Herstellung von pelletförmigen mit pulvrigem Drainagematerial bepuderten Schlammformkörpern eine Einrichtung zu schaffen, die vergleichsweise einfach und klein gebaut ist und trotzdem eine hohe Durchsatzleistung ermöglicht, und die Formkörper erzeugt, die sich in der nachgeschalteten Presse sehr wirkungsvoll auspressen und damit nachentwässern lassen.

Diese Aufgabe wird gemäß der Erfindung mit einer Einrichtung gelöst, die mit vorteilhaften Ausgestaltungen in den Ansprüchen 1 bis 10 gekennzeichnet ist.

Bei der erfindungsgemäßen Einrichtung handelt es sich nicht um eine konventionelle Pelletiermaschine wie rotierende Pelletiertrommel oder rotierender Pelletierteller jeweils mit undurchlässigem Boden, wie sie zur sogenannten Aufbaugranulierung geeignet ist, bei der ausgehend von feinkörnigem Gut unter Zusatz eines Netzmittels Pellets geformt werden. Vielmehr handelt es sich demgegenüber bei der Erfindung um eine eigenständige Maschine, deren Rotorbo den absichtlich durchlässig ist, indem er mit in Umfangsrichtung verlaufenden Schlitzen zum Durchtritt der fertig geformten Schlammformkörper versehen ist. Die Schlitze haben im wesentlichen zwei Aufgaben. Sie dienen dem schnellen Austritt bereits ausreichend kleiner pelletförmiger Formkörper aus dem Rotor, wobei diese Formkörper im Rotor selbst nur eine kurze Verweilzeit haben, und sie verhindern zugleich wirksam den Austritt zu großer Formkörper. Gegenüber der bekannten Pelletiertrommel ist bei der erfindungsgemäßen Einrichtung die Durchsatzleistung erheblich erhöht und zugleich ist die Beanspruchung des z. B. in einer Zentrifuge entwässerten Schlammes infolge der kürzeren Verweilzeit in der erfindingsgemäßen Einrichtung schonender. Es kann deutlich feuchteres, auch zur Thixotropie neigendes Schlammmaterial (beispielsweise Hafenschlick) zu Formkörpern geformt werden, wogegen sich ein solches Material in der bekannten Pelletiertrommel zu dicken Klumpen aufbauen würde.

Der Rotor der erfindungsgemäßen Einrichtung kann eine Trommel sein mit im wesentlichen horizontaler Rotationsachse und gewölbtem Trommelmantel als rotierender Boden, wobei die sich im wesentlich über die gesamte Trommellänge erstreckenden Schlitze im Trommelmantel in Drehumfangsrichtung oder schraubenlinienförmig liegend angeordnet sind. Bei einer Rotortrommel ist immer nur der relativ geringe Anteil der vorhandenen Schlitzflächen im Bereich der von unten nach oben aufsteigenden Trommelwand mit Schlammaterial in Kontakt und trägt zum Durchsatz bei. Da die Durchsatzleistung einer Rotortrommel in vorliegenden Fall nur etwa linear mit deren Größe zunimmt, würden die in der Praxis geforderten hohen Durchsätze an zu formendem Schlammmaterial zu exrem großen Trommelabmessungen führen. Daher ist nach einem besonderen Merkmal der Erfindung der Rotor der Einrichtung zur Herstellung der pelletförmigen Schlammformkörper ein Teller mit zur Horizontalebene geneigtem Tellerboden, in welchem die Schlitze zum Durchtritt der fertig geformten Formkörper konzentrisch oder spiralförmig angeordnet sind.

Nach einem weiteren Merkmal der Erfindung ist oberhalb des von unten nach oben aufsteigenden Bereiches des rotierenden Bodens sowohl der Rotortrommel als insbesondere auch des Rotortellers ortsfest eine drehende Hauptmesserwelle zur Zerteilung des aufgegebenen Schlammes sowie zur möglichst weitgehenden Verteilung der gebildeten Formkörper auf dem Boden der Trommel bzw. des Tellers angeordnet. Dadurch ist eine hohe Durchtrittswahrscheinlichkeit der fertigen Formkörper durch die Schlitze sichergestellt.

Außerdem ist oberhalb des Bodens des Rotors wenigstens eine Transporteinrichtung zur Zuführung und Zudosierung des pulvrigen Drainagematerials angeordnet.

Die Erfindung und deren weiteren Merkmale und Vorteile werden anhand der in den Figuren schematisch dargestellten Ausführungsbeispiele näher erläutert. Es zeigt:

Fig. 1 in Ansicht bzw. im Vertikalschnitt die erfindungsgemäße Einrichtung zur Herstellung von pelletförmigen mit pulvrigem Drainagematerial bepuderten Formkörpern aus mechanisch entwässertem Schlamm, in Gestalt eines rotierenden Tellerbodens;

Fig. 2 in vergrößerter Darstellung die Draufsicht auf den rotierenden Tellerboden der Fig. 1;

Fig. 3 ausschnittsweise in vergrößerter Darstellung den Vertikalschnitt quer durch einen im Rotorboden angebrachten Schlitz;

Fig. 4 ausschnittsweise in vergrößerter Darstellung den Vertikalschnitt quer durch den Rotorboden an einer Stelle zwischen zwei hintereinander benachbarten Schlitzen in Schlitzlängsrichtung gesehen;

Fig. 5 in vergrößerter Darstellung die Draufsicht auf einen der Schlitze im Rotorboden der Fig. 2;

Fig. 6 einen Schnitt längs der Linie VI-VI der Fig. 5;

Fig. 7 einen rotierenden Tellerboden mit integriertem, mitrotierendem Kegelstumpf;

Fig. 8 einen rotierenden Tellerboden mit integriertem, mitrotierendem Trichter und

Fig. 9 die erfindungsgemäße Einrichtung in Gestalt einer rotierenden Trommel.

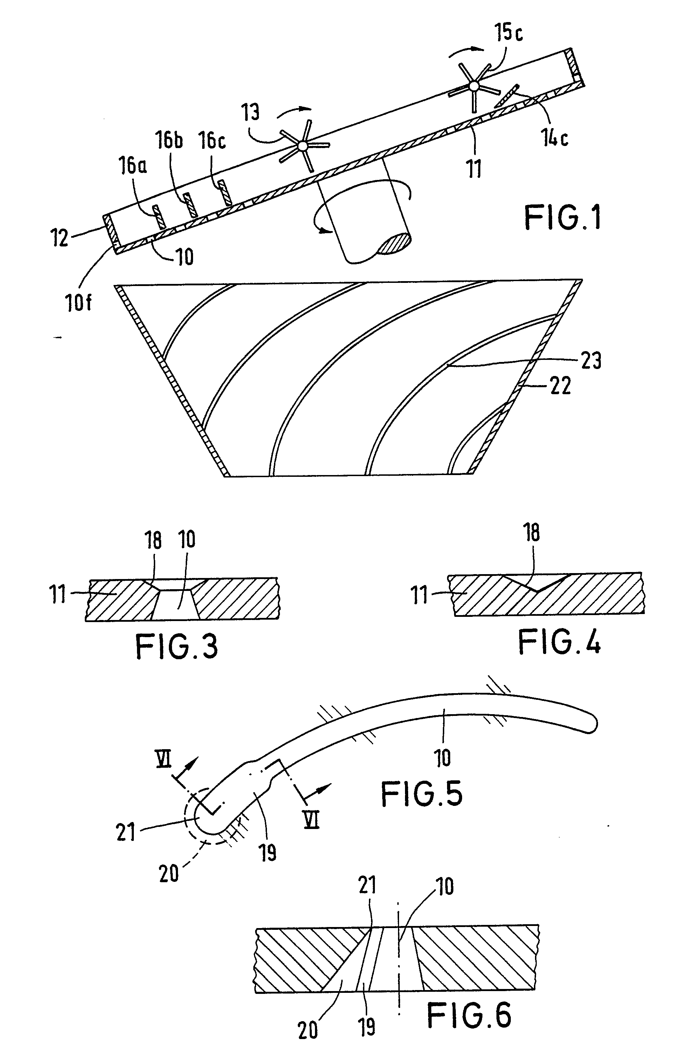

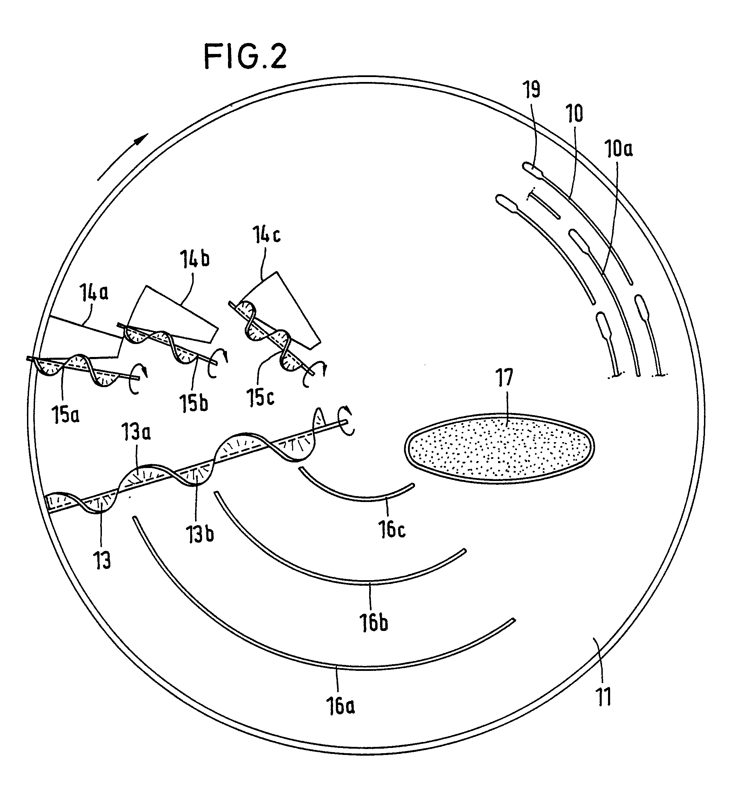

Nach den Figuren 1 und 2 besteht die erfindungsgemäße Einrichtung aus den folgenden Hauptkomponenten: Der in Neigung und Drehzahl verstellbare, mit einer Vielzahl von konzentrisch oder spiralförmig angeordneten Schlitzen (10, 10a usw.) versehene Tellerboden (11) ist kreisrund und er schließt an seiner Peripherie mit einer Bordwand (12) ab. Die Schlitze (10, 10a usw.) sind in mehreren Schlitzreihen über den gesamten Umfang des Tellerbodens (11) verteilt. Oberhalb des von unten nach oben aufsteigenden Bereiches des rotierenden Bodens (11) ist zur Zerteilung des aufgegebenen Schlammes ortsfest eine Hauptmesserwelle (13) angeordnet, die im wesentlichen radial zum Teller (11) verläuft, die mit einer Vielzahl von vorzugsweise gegensinnig zum Teller rotierenden Messern (13a, 13b usw.) bestückt ist und die zweckmäßigerweise von einem eigenen Drehantrieb angetrieben ist. Ebenfalls im Bereich des von unten nach oben aufsteigenden Bereiches des Tellerbodens (11) und in Tellerdrehrichtung gesehen hinter der Hauptmesserwelle (13) ist oberhalb des Tellerbodens mindestens ein Abstreifer angeordnet, im Ausführungsbeispiel der Fig. 2 drei Abstreifer (14a, 14b, 14c), deren gegen den Teller (11) flache, ggf. konkav gekrümmte schneidenartige Formgebung und Neigung das auf dem Teller befindliche Schlammmaterial zu weiter zentral liegenden Tellerbereichen verschiebt. Über den Schneidkanten der Abstreifer (14a, 14b, 14c) ist jeweils eine eigene vorzugsweise gegensinnig zum Tellerboden (11) rotierende Messerwelle (15a, 15b, 15c) angeordnet, die zweckmäßigerweise ebenfalls von einem eigenen Drehantrieb angetrieben sind. Im unteren Teil des von unten nach oben aufsteigenden Bereiches des rotierenden Tellerbodens (11) sind orts- fest konzentrisch oder spiralförmig Leitbleche (16a, 16b, 16c) angeordnet, die sich mit dem Tellerboden (11) nicht mitdrehen und deren Anzahl sich nach der Tellergröße und den Formungseigenschaften des in die pelletförmigen Formkörper zu formenden Schlammateriales richtet.

Das in die pelletförmigen Formkörper zu formende Schlammmaterial wird vorzugsweise im abwärtsbewegten Bereich des Tellerbodens (11) z. B. mittels Förderband oder direkt aus einer Zentrifuge auf den Tellerboden aufgegeben, in Fig. 2 schematisch dargestellt durch die schraffiert gezeichnete ovale Schlammaufgabestelle (17), derart, daß es mit Hilfe der Leitbleche (16a, 16b, 16c) möglichst gleichmäßig verteilt der Hauptmesserwelle (13) zugeführt wird. Das vorzerkleinerte Schlammaterial kann den Einflußbereich der Messerwelle (13) passieren, zu grobe Teile werden von den Messern (13a, 13b) zurückgestoßen und mit Hilfe des hier aufwärtsbewegten Tellerbodens (11) einer erneuten Beanspruchung durch die Messer zugeführt.

Das vorzerteilte Schlammaterial gelangt infolge der Drehung des Tellerbodens (11) in den Bereich der Abstreifer (14a) bis (14c), an denen sich das Material staut und zu weiter zentral liegenden Tellerbereichen verschoben wird. Der Materialstau vor den Abstreifern (14a) bis (14c), der durch eine bevorzugte Ausgestaltung derselben in eine rollende Umwälzbewegung versetzt wird, sorgt zugleich in diesem Bereich für eine besonders hohe Durchtrittswahrscheinlichkeit hinreichend kleiner fertig geformter pelletförmiger Formkörper durch die Tellerschlitze (10, 10a usw.). Die über den Abstreifern (14a, 14b, 14c) angeordneten gegensinnig zur Tellerbodenoberfläche rotierenden Messerwellen (15a, 15b, 15c) sorgen im Bereich der rollenden Umwälzbewegung des Schlammmateriales für eine wirksame Nachzerteilung solcher Materialklumpen, die als pelletförmige Formkörper noch zu groß sind.

Eine Teilmenge des zur Bepuderung der geformten Schlammformkörper benötigten Drainagestaubes wird zweckmäßig im Bereich der Hauptmesserwelle (13) über deren gesamter Länge aufgegeben, um die frisch gebildeten feuchten Oberflächen zu bestäuben und deren Wiederzusammenkleben zu verhindern. Mit derselben Begründung kann es zweckmäßig sein, weitere Teilmengen an Drainagestaub im Bereich der weiteren Messerwellen (15a) bis (15c) aufzugeben. Das ist aber nicht zwingend erforderlich, da bei ausreichender Staubdosierung im Bereich der Hauptmesserwelle (13) hinreichend freier Staub in die Bereiche der weiteren Messerwellen (15a) bis (15c) gelangt.

Wie aus Fig. 1 ersichtlich, ist der Teller (11) selbst, um eine möglichst aufgelockerte Materialbewegung zu erreichen, mit 10° bis 45° vorzugsweise 20° bis 30°, gegen die Horizontale geneigt. Er wird, um ein Anhaften des zu formenden Schlammateriales weitgehend zu vermeiden, zweckmäßigerweise aus Kunststoff gefertigt. Damit ist der Teller (11) auch leichtgewichtig und gut zu bearbeiten. Wie insbesondere aus Fig. 2 ersichtlich, ist der Tellerboden (11) mit der Vielzahl der z. B. konzentrisch verlaufenden Schlitze (10, 10a usw.) durchbrochen, wobei in einer vorteilhaften Ausgestaltung die auf einem Radius verlau fenden Schlitze an der Telleroberseite durch auf demselben Radius verlaufende Rillen bzw. Nuten (18) oder dergleichen verbunden sind. So zeigt die Fig. 3 eine solche Nut (18) im Bereich des Schlitzes (10) und die Fig. 4 zeigt die gleiche Nut (18) in einem Bereich zwischen zwei hintereinanderfolgenden Schlit- zen, in Schlitzlängsrichtung gesehen. In diesen Nuten (18) fangen sich beim Abrollen über den Tellerboden (11) hinreichend kleine pelletförmige Formkörper und sie werden damit beschleunigt den Schlitzen (10, 10a usw.) zugeführt. Die den Teller abschließende Bordwand (12) wird vorteilhaft ebenfalls mit einer Vielzahl von in Umfangsrichtung verlaufenden Schlitzen (10f) durchbrochen, die bevorzugt direkt über dem Tellerboden (11) angeordnet sind. Die bevorzugte Gestaltung der Schlitze entspricht sinngemäß der folgenden Beschreibung für die Tellerschlitze.

Wie insbesondere aus Fig. 5 deutlich hervorgeht, werden die zur Tellerunterseite zweckmäßigerweise prismenartig mit einem Winkel von 10° bis etwa 30°, z. B. 15°, öffnenden Schlitze (10, 10a usw.), soweit mit der konstruktiven Gestaltung des Tellers (11) vereinbar, möglichst lang ausgeführt und sie haben bevorzugt drei unterschiedlich gestaltete Abschnitte. Der im wesentlichen (ca. 70 bis 95 % der Länge) schmale Schlitz (10) mit einer Weite von etwa 6 bis 12 mm, vorzugsweise 8 mm, erweitert sich in Richtung gegen den Drehsinn des Tellers (11) auf einem weiteren Teilstück (19) (ca. 5 bis 30 % der Schlitzlänge, Weite etwa 8 bis 16 mm, vorzugsweise 12 mm) und endet in einer von der Tellerunterseite her angebrachten 60° bis 90° - Senkung (20), die ein schneidenförmiges Schlitzende (21) ergibt. Das Verhältnis der schmaleren zu den erweiterten Schlitzanteilen beeinflußt die resultierende Größenverteilung der pelletförmigen Formkörper. Durch die Erweiterung (19) des Schlitzes (10) in Richtung entgegen der Tellerdrehung kommen im engeren Schlitz klemmende, aber durch anderes Schlammaterial in dieser Richtung verschobene pelletförmige Schlammformkörper wieder frei. Dieselbe Aufgabe hat die auf der Tellerunterseite konisch stark erweiterte Senkung (20) am Schlitzende.

Die an der Tellerunterseite durch die Schlitze ausgetragenen pelletförmigen Formkörper können unter Umständen nicht ausreichend und vollkommen mit Drainagestaub bestaubt sein. Um in diesem Falle eine vollständige Anlagerung des Staubes an die Schlammformkörper sicherzustellen, können diese und der durch den Schlitzboden (11) des Tellers gefallene freie Staub einer nachgeschalteten Bepuderungseinrichtung beispielsweise in Form einer rotierenden Trom mel zugeführt werden, in der die Schlammformkörper im wesentlichen einer Abrollbewegung unterzogen werden.

Die Bepuderungseinrichtung wird erfindungsgemäß zweckmäßig in den Tellerrotor (11) integriert, in dem alternativ oder in Kombination eine der folgenden Vorrichtungen vorgesehen wird:

a) Unterhalb des Tellers (11) wird ein drehfester, mit lotrechter Achse stehender kegelstumpfförmiger Trichter (22) angeordnet (Fig. 1), dessen Wände steiler verlaufen als der Schüttwinkel des pelletförmigen Formkörpermateriales und dessen Trichterfläche bevorzugt so aufgerauht oder mit in Richtung der Scheitellinien verlaufenden Nuten, Riefen oder anders geformten Vertiefungen oder Erhebungen oder mit gegen die Scheitellinien geneigten spiralförmig verlaufenden Nuten, Riefen (23) oder anders geformten Vertiefungen oder Erhebungen versehen ist derart, daß das Herunterfallen der pelletförmigen Formkörper im Trichter (22) bevorzugt als Abrollbewegung erfolgt, d. h. daß die Abrollbewegung erzwungen wird.

b) Unterhalb des Tellers (11) wird entsprechend a) ein kegelstumpfförmiger Trichter angeordnet, der in Schwingungen versetzt wird, so daß das Abrollverhalten der pelletförmigen Formkörper begünstigt wird und die Trichterwände flacher verlaufen können.

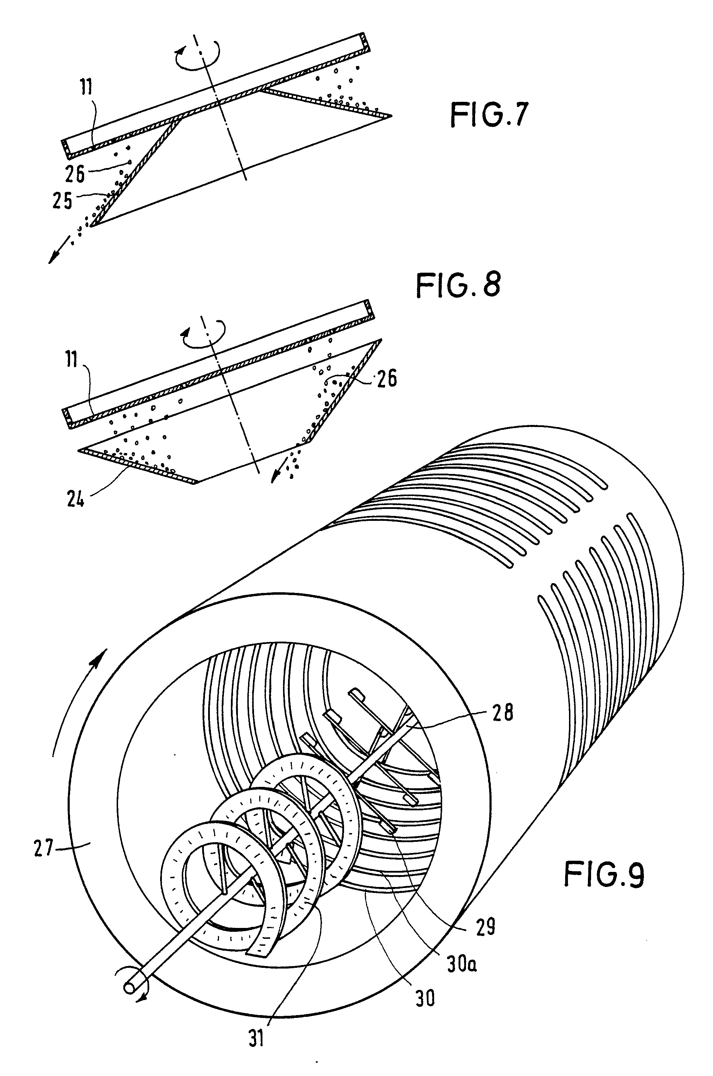

c) Unterhalb des geschlitzten Tellerbodens (11) ist konzentrisch mit derselben Welle angetrieben ein kegelstumpfförmiger Trichter (24) - Fig. 8 - oder Kegel (25) - Fig. 7 - mit einer derartigen Oberflächenbeschaffenheit angeordnet, daß die durch die Schlitze des Tellerbodens (11) nach unten auf die Trichter- bzw. Kegeloberfläche fallenden pelletförmigen Schlammformkörper (26) auf dieser nach unten abrollen und sich dabei mit weiterem pulvrigem Drainagematerial umhüllen. Die erforderliche Neigung des Trichters (24) oder Kegels (25) richtet sich nach dem Schüttwinkel des Formkörpermateriales (26). Sie muß größer sein als die Differenz zwischen Schüttwinkel und Neigungswinkel des Tellers (11). Die Scheitellinien des Trichters (24) oder Kegels (25) nehmen im Laufe einer Umdrehung unterschiedliche Neigungen gegen die Horizontale ein. Bei Erfüllung obiger Bedingung wird in der steilsten Stellung der Trichterwand bzw. Kegelstumpfwand der Schüttwin kel überschritten, so daß die pelletförmigen Formkörper (26) vollständig herunterrollen. Die Trichter- bzw. Kegelfläche wird bevorzugt so aufgerauht oder mit in Richtung der Scheitellinien verlaufenden Nuten, Riefen oder anders geformten Vertiefungen oder Erhebungen oder mit gegen die Scheitellinien geneigten spiralförmig verlaufenden Nuten, Riefen oder anders geformten Vertiefungen oder Erhebungen versehen derart, daß die Abwärtsbewegung der Formkörper vom Trichter bzw. vom Kegelstumpf bevorzugt als Abrollbewegung erfolgt. Die kegelige Fläche kann alternativ so ausgeführt sein, daß die gedachte Kegelspitze oberhalb des Tellers (11) liegt und die pelletförmigen Formkörper (26) auf den äußeren Kegelstumpfmantel (25) fallen und auf diesem abrollen (Fig. 7), oder daß die Trichterfläche (24) an ihrem größten Durchmesser unmittelbar oder mit einem bestimmten Abstand an den Teller (11) anschließt und sich nach unten trichterförmig verjüngt, so daß die Formkörper (26) innen in den Trichter (24) fallen und dort abrollen (Fig. 8). In beiden Fällen erfolgt der Abwurf der Formkörper (26) bezogen auf die gesamte Tellerdrehung in einem vergleichsweise begrenzten Winkelbereich.

Die in den rotierenden Teller (11) hineinreichenden Einrichtungen wie Messerwellen (13, 15), Leitbleche (16) und Abstreifer (14) können zweckmäßigerweise in zwei oder mehr Einheiten zusammengefaßt sein, die mit einem drehfesten Tellerrahmen verbunden sind, der seinerseits Verstellungen der Tellerneigung mitmacht. Die Einheiten werden dann schwenkbar am Tellerrahmen so befestigt, daß sie zu Wartungsoder Reinigungszwecken aus dem Teller (11) herausgeschwenkt werden können, und daß sowohl der Abstand zum Teller wie auch die Winkelposition zur Tellerachse verstellbar sind. Vorzugsweise werden die Einrichtungen zu zwei Einheiten zusammengefaßt, nämlich zu einer Einheit bestehend aus Hauptmesserwelle (13) und Leitblechen (16) und zu einer zweiten Einheit bestehend aus den Abstreifblechen (14) sowie den ggf. zugeordneten Messerwellen (15).

Um den Füllungsgrad des rotierenden Tellers (11) zu überwachen, werden alternativ oder in Kombination das Tellergewicht und/oder die Materialanhäufung im Teller gemessen. Die Gewichtsmessung erfolgt zweckmäßig in bekannter Weise über Kraftaufnehmer, die das Tellergewicht registrieren. Die Materialanhäufung im Teller (11) kann zweckmäßig durch eine in den Teller im Randbereich eintauchende Signalfahne (Blechfahne) überwacht werden, die bei kritischer Auslenkung einen Endschalter betätigt.

Je nach Konsistenz des zu pelletierenden, d. h. hier des zu zerteilenden Schlammateriales gibt es sowohl zur Vorzerteilung an der Hauptmesserwelle (13) wie zur Fertigzerteilung an den anderen Messerwellen (15) Optimalbereiche der Beanspruchsgeschwindigkeit. Daher sind gleiche Beanspruchsbedingungen über die jeweils gesamte Länge einer Messerwelle anzustreben. Die lokale Beanspruchungsgeschwindigkeit ergibt sich bei gegensinniger Drehrichtung der Messer zum Teller (11) jeweils als Summe der Lokalen Umfangsgeschwindigkeit des Tellers und der Umfangsgeschwindigkeit des Messers. Da sich die lokale Umfangsgeschwindigkeit auf dem Teller (11) linear mit dem Tellerradius erhöht, wird vorgeschlagen, die Messerlänge zu größeren Tellerradien hin entsprechend linear zu verkürzen, um die Summe der Geschwindigkeiten konstant zu halten. Da der Messerabstand zum Teller (11) zweckmäßigerweise konstant ist, ist dann die Messerwelle selbst gegenüber dem Teller geneigt. - Der Messerabstand zum Teller (11) ist geringer als etwa 15 mm, vorzugsweise je nach Material 1 bis 5 mm zu wählen.

Die Messer auf den Messerwellen (13, 15) werden zweckmäßig wendelförmig angeordnet derart, daß die gedachte Wendelfläche eine Förderrichtung zum Zentrum des Tellers (11) bewirkt. Die über dem Teller (11) angeordneten Leitbleche (16) erhalten vorzugsweise einen Abstand ihrer Unterkante zum Tellerboden in der Größenordnung der maximal zulässigen Größe der pelletförmigen Formkörper.

In einem inhomogenen Material wie beispielsweise Klärschlamm sind faserige Inhaltsstoffe wie Haare unvermeidlich, die sich auf den Messern der Messerwellen (13, 15) aufbauen können. Diese müssen von Zeit zu Zeit entfernt werden. Es wird vorgeschlagen, zeitweise eine kammartige über den Messerwellen angeordnete Einrichtung soweit abzusenken, daß das angelagerte Material wirksam abgestreift wird. Dazu laufen die Messerwellen bevorzugt kurzzeitig mit entgegengesetzter Drehrichtung.

Beim Ausführungsbeispiel der Fig. 9 erfolgt die Aufgabe sowohl des vorentwässerten Schlammes wie des Drainagestaubes durch eine oder beide stirnseitige Öffnungen der rotierenden Trommel (27). Beide Materialien werden durch die langsam rotierende Trommel (27) der wie- derum im Bereich der aufsteigenden Trommelwand angeordneten Messerwelle (28) zugeführt. Die gleichsinnig mit höherer Umfangsgeschwindigkeit als die Trommel umlaufenden Messer (29) bewirken die erwünschte sehr schonende Zerteilung des vorentwässerten Schlammes. Ausreichend kleine pelletförmige Formkörper verlassen die Trommel (27) durch die Schlitze (30, 30a usw.) in der Trommelwand. Die Schlitze (30, 30a usw.) sind im Prinzip analog den Schlitzen (10, 10a usw.) der Fig. 2 ausgebildet. Zu große pelletförmige Formkörper werden von den Schlitzen zurückgehalten und einer erneuten Zerteilung durch die Messerwelle (28) zugeführt. Der vorentwässerte Schlamm wird vorzugsweise im Bereich der Trommelachse, der Drainagestaub dagegen bevorzugt im Bereich der Messerwelle aufgegeben, um insbesondere die frisch gebildeten Oberflächen zu bestäuben und deren Wiederzusammenkleben zu verhindern. Der größte Teil des erforderlichen Drainagestaubes wird so bereits in der Trommel (27) aufgenommen. Um eine vollständige Anlagerung des Staubes an den pelletförmigen Formkörpern sicherzustellen, können diese und der durch die Schlitztrommelwand gefallene Staub wiederum einer nachgeschalteten Bepuderungseinrichtung, etwa einer Bepuderungstrommel zugeführt werden.

Die Einstellungen der Einrichtung hinsichtlich Drehzahlen von Trommel (27) und Messerwelle (28) sind materialabhängig, d. h. abhängig sowohl vom vorentwässerten Material wie vom Drainagematerial. Die Trommel ist mit einer Drehzahl von etwa 5 bis 25 % vorzugsweise 12 bis 15 % der kritischen Drehzahl zu betreiben, bei welcher das Gut über den oberen Scheitelpunkt der Trommel mitgenommen werden würde.

In einer bevorzugten Ausführung werden sowohl das vorentwässerte Material wie das Drainagematerial verteilt über die Trommellänge aufgegeben. Mit besonderem Vorteil sind an der Messerwelle (28) zugleich Förderelemente in Form von angestellten Paddeln oder Abschnitten einer Schneckenwendel (31) angebracht, die für eine Längsverteilung des an einer oder mehreren Stellen aufgegebenen vorentwässerten Schlammmateriales in der Trommel (27) sorgen. Alternativ oder ergänzend dazu kann die Längsverteilung des vorentwässerten Materiales in der Trommel (27) auch dadurch erfolgen, daß die gesamte Trommel oder Trommelabschnitte von den Aufgabepunkten ausgehend ein geeignetes Gefälle aufweisen. Der Abstand der Peripherie der Messer (29) von der Trommelinnenwandung ist gleich oder kleiner etwa 15 mm.

Es versteht sich, daß die Erfindung außer für mechanisch vorentwässerten Schlamm auch für beliebige Materialien anwendbar ist, die eine pastöse zerteilbare Masse bilden, z. B. aus dem Lebensmittelbereich, wobei die dann gebildeten Formkörper ggf. nicht bepudert sein müssen.

## Ansprüche

1. Einrichtung zur Herstellung von pelletförmigen mit pulvrigem Drainagematerial bepuderten Formkörpern aus mechanisch entwässertem Schlamm, insbesondere Klärschlamm, mit einem Rotor, auf dessen Boden der Schlamm mittels oberhalb des Rotorbodens rotierenden Messern in Portionen zerteilt und dadurch zu den Formkörpern geformt werden, dadurch gekennzeichnet, daß der Boden des Rotors (11, 27) mit in Umfangsrichtung verlaufenden Schlitzen (10, 30) zum Durchtritt der fertig geformten Formkörper (26) versehen ist.

2. Einrichtung nach Anspruch 1, dadurch gekennzeichnet, daß der Rotor ein Teller (11) mit zur Horizontalebene geneigtem Tellerboden ist.

3. Einrichtung nach Anspruch 1, dadurch gekennzeichnet, daß der Rotor eine Trommel (27) mit im wesentlichen horizontaler Rotationsachse und mit dem Trommelmantel als rotierender Boden ist.

4. Einrichtung nach Anspruch 2, dadurch gekennzeichnet, daß die Schlitze (10, 10a usw.) im Tellerboden (11) konzentrisch oder spiralförmig liegend angeordnet sind.

5. Einrichtung nach Anspruch 3, dadurch gekennzeichnet, daß die Schlitze (30, 30a usw.) im Trommelmantel (27) in Drehumfangsrichtung oder schraubenlinienförmig liegend angeordnet sind.

6. Einrichtung nach einem oder mehreren der Ansprüche 1 bis 5, dadurch gekennzeichnet, daß die Schlitze (10, 30) in Drehrichtung gesehen einen Schlitzlängenendbereich (19) aufweisen, in welchem die Schlitzbreite größer ist als im übrigen Schlitzlängenbereich.

7. Einrichtung nach den Ansprüchen 1 bis 6, dadurch gekennzeichnet, daß die auf Kreisbahnen oder Spiralbahnen angeordneten Schlitze (10, 30) auf der produktberührten Seite durch entsprechend kreisbahnförmig oder spiralbahnförmig liegende, das Abrollen der Schlammformkörper auf den Schlitzbahnen erleichternde Nuten (18) miteinander verbunden sind.

8. Einrichtung nach den Ansprüchen 1 bis 7, dadurch gekennzeichnet, daß sich die Schlitze (10, 30) in ihrer Breite nach unten in Durchtrittsrichtung der fertig geformten Formkörper gesehen konisch erweitern.

9. Einrichtung nach einem oder mehreren der Ansprüche 1 bis 8, dadurch gekennzeichnet, daß oberhalb des von unten nach oben aufsteigenden Bereiches des rotierenden Bodens (11, 27) ortsfest eine Hauptmesserwelle (13, 28) zur Zerteilung des aufgegebenen Schlammes sowie wenigstens eine Transporteinrichtung zur Zuführung und Zudosierung des pulvrigen Drainagematerials angeordnet sind.

10. Einrichtung nach einem oder mehreren der Ansprüche 1 bis 9, dadurch gekennzeichnet, daß unterhalb des mit den Schlitzen (10) versehenen Rotorbodens (11) ein kegelstumpfförmiger Trichter (24) oder Kegel (25) mit einer derartigen Oberflächenbeschaffenheit angeordnet ist, daß die durch die Rotorbodenschlitze nach unten auf die Trichter- bzw. Kegeloberfläche fallenden Schlammformkörper (26) auf dieser nach unten abrollen und sich dabei mit weiterem pulvrigen Drainagematerial umhüllen.

FIG.1

FIG.3

FIG.4

FIG.5

FIG.6

# FIG.2

FIG.7

FIG.8

FIG.9